(19) Europäisches Patentamt
European Patent Office
Office européen des brevets

(11) Veröffentlichungsnummer: **0 100 043**
**A2**

(12) # EUROPÄISCHE PATENTANMELDUNG

(21) Anmeldenummer: **83107009.9**

(22) Anmeldetag: **18.07.83**

(51) Int. Cl.³: **C 09 B 67/24**, C 09 B 41/00, C 09 B 69/02

(30) Priorität: **29.07.82 DE 3228339**

(43) Veröffentlichungstag der Anmeldung: **08.02.84 Patentblatt 84/6**

(84) Benannte Vertragsstaaten: **CH DE FR GB LI**

(71) Anmelder: **BAYER AG, Zentralbereich Patente, Marken und Lizenzen, D-5090 Leverkusen 1, Bayerwerk (DE)**

(72) Erfinder: **Wolff, Joachim, Dr., Neuenhauser Weg 6, D-5060 Bergisch Gladbach 2 (DE)**
Erfinder: **Wolf, Karlheinz, Dr., Paul-Klee-Strasse 77, D-5090 Leverkusen 1 (DE)**
Erfinder: **Ditzer, Reiner, Dr., In der Follenmühle 21, D-5068 Odenthal (DE)**
Erfinder: **Hörnle, Reinhold, Dr., Hufelandstrasse 42, D-5000 Köln 80 (DE)**

(54) **Verfahren zur Herstellung salzarmer Präparationen von Azoreaktivfarbstoffen.**

(57) Die vorliegende Erfindung betrifft ein neues Verfahren zur Herstellung salzarmer Präparationen von Azoreaktivfarbstoffen in Form konzentrierter lagerstabiler Lösungen oder in Pulver- oder Granulatform. Die erfindungsgemäß hergestellten Präparationen enthalten Reaktivfarbstoffe der Formel

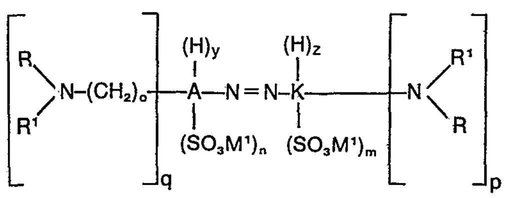

worin

A, K, M¹, R, R¹, m, m, o, p, q, y und z die im Anmeldungstext angegebene Bedeutung besitzen.

Die salzarmen Präparationen werden hergestellt durch Diazotierung der Diazokomponente sowie Kupplung mit der Kupplungskomponente bei pH 5–9 und Einführung der Reaktivgruppe in Gegenwart von säurebindenden Mitteln. Die Einführung der Reaktivgruppe kann dabei zu verschiedenen Stadien des Herstellungsverfahrens erfolgen.

Das Verfahren zur Herstellung der Reaktivfarbstoffe der Formel (1) ist dadurch gekennzeichnet, daß man die Diazotierung mit einer Säure durchführt, deren Anion während oder nach der Kupplung durch Umsetzung mit entsprechenden Metallkationen als schwerlösliches Salz ausgefällt und abgetrennt wird.

EP 0 100 043 A2

BAYER AKTIENGESELLSCHAFT 5090 Leverkusen, Bayerwerk
Zentralbereich
Patente, Marken und Lizenzen Er/bo/c

# Verfahren zur Herstellung salzarmer Präparationen von Azoreaktivfarbstoffen

Die vorliegende Erfindung betrifft ein neues Verfahren zur Herstellung salzarmer Präparationen von Azoreaktivfarbstoffen in Form konzentrierter lagerstabiler Lösungen oder in Pulver- oder Granulatform. Die erfindungsgemäß hergestellten Präparationen enthalten Reaktivfarbstoffe der Formel

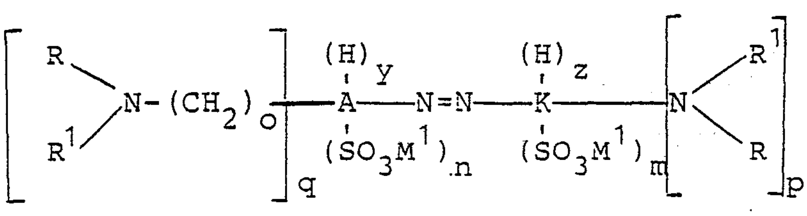

worin

A = Rest einer Diazokomponente,
K = Rest einer Kupplungskomponente,
$M^1$= $NH_4$, Na, K oder Li,
R = heterocyclischer Reaktivrest,
$R^1$= Wasserstoff oder Alkyl ($C_1$-$C_4$),
m,n = ganze Zahlen von 0 bis 6, wobei m + n = 1 bis 6,

o = 1 bis 4,
p,q= 0 oder 1, wobei p + q = 1,
y,z= 0 oder 1, wobei y + z = 1,
und wobei q + y = 1 sowie p + z = 1,

und werden hergestellt durch Diazotierung der Diazokomponente sowie Kupplung mit der Kupplungskomponente bei pH 5 - 9 und Einführung der Reaktivgruppe in Gegenwart von säurebindenden Mitteln. Die Einführung der Reaktivgruppe kann dabei zu verschiedenen Stadien des Herstellungsverfahrens erfolgen.

Das Verfahren zur Herstellung der Reaktivfarbstoffe der Formel (1) ist dadurch gekennzeichnet, daß man die Diazotierung mit einer Säure durchführt, deren Anion während oder nach der Kupplung durch Umsetzung mit entsprechenden Metallkationen als schwerlösliches Salz ausgefällt und abgetrennt wird.

Vorzugsweise wird beim erfindungsgemäßen Verfahren die Diazotierung und Ausfällung als schwerlösliches Salz mit folgenden Säuren/Metallkationen durchgeführt:

Schwefelsäure/$Ca^{2+}$ oder $Ba^{2+}$
Phosphorsäure/$Ca^{2+}$ oder $Ba^{2+}$ oder $Li^{+}$
Oxalsäure/$Ca^{2+}$ oder $Ba^{2+}$
Flußsäure/$Ca^{2+}$ oder $Ba^{2+}$

Es ist bereits bekannt, salzarme Präparationen der Reaktivfarbstoffe (1) in Form von konzentrierten Lösungen oder Pulver bzw. Granulatform wie folgt herzustellen:



BAD ORIGINAL

1. Der salzhaltige Preßkuchen bzw. die trockene salzhaltige Fabrikware wird, wenn nötig unter Zusatz von geeigneten Lösevermittlern, in Wasser gelöst. Die verdünnte, salzhaltige Lösung wird wie beschrieben in der Offenlegungsschrift DE 2 948 292 A 1 der Druckpermeation unterworfen, entsalzt und aufkonzentriert. Man kann auch direkt die verdünnte wäßrige Reaktionsbrühe verwenden. Das Verfahren ist aufwendig, und häufig tritt bei längerer Verweildauer des Reaktivfarbstoffs in der Apparatur Hydrolyse ein.

2. Nicht geeignet für die Herstellung salzarmer Präparationen der Reaktivfarbstoffe (1) ist die Aussalzung des Reaktivfarbstoffs mit flüchtigen Ammoniumsalzen und anschließender Trocknung bei höherer Temperatur. Der Reaktivfarbstoff wird bei diesem Verfahren zum größten Teil hydrolysiert.

3. Ein weiteres Verfahren zur Herstellung salzarmer konzentrierter Flüssigeinstellungen von anionischen Farbstoffen ist in der DAS 2 115 877 beschrieben.

Man fällt den Farbstoff mit einem zur Bildung eines schwer löslichen Farbstoff-Salzes befähigten Kation aus. Dieses Farbstoff-Salz wird gegebenenfalls in Gegenwart von mit Wasser mischbaren organischen Lösungsmitteln in Wasser suspendiert. Dieser Suspension wird eine anorganische Säure zugesetzt, die mit dem Kation des Farbstoff-Salzes ein schwerer



BAD ORIGINAL

lösliches anorganisches Salz bildet. Der Farbstoff geht dabei nach Neutralisation mit Ammoniak oder anderen Basen wieder in Lösung.

Nachteilig bei diesem Verfahren ist die Zahl der nötigen Reaktionsschritte, sowie die oft nur schwierige und mit Farbstoffverlusten verbundene Ausfällung des Farbstoffs als schwerlösliches Salz.

Der Vorteil des neuen erfindungsgemäßen Verfahrens zur Herstellung von salzarmen Präparationen der Reaktivfarbstoffe (1) besteht darin, daß direkt als Endprodukt der Synthese nach einfacher Klärung eine lagerstabile salzarme, konzentrierte, und im Falle des Einsatzes Fluoridionen abspaltender Reaktivgruppen nahezu Fluoridionen freie Präparation der Reaktivfarbstoffe (1) erhalten wird.

Es ist dabei in hohem Maße überraschend, daß durch die Zugabe der das schwerlösliche Salz bildenden Kationen der Azoreaktivfarbstoff nicht ausgesalzt wird, sondern in Lösung bleibt.

In einer bevorzugten Ausführungsform des erfindungsgemäßen Verfahrens wird zunächst die Kupplungskomponente der Formel

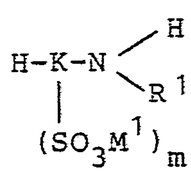

mit der Reaktivkomponente der Formel

R-X (1a)



BAD ORIGINAL

in Gegenwart säurebindender Mittel zu Verbindungen der Formel

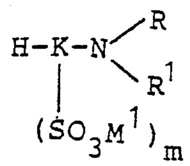

umgesetzt und ohne Isolierung gegebenenfalls nach Zusatz von konzentrationserhöhenden Zusatzstoffen mit der Diazotierung, enthaltend das Diazoniumkation

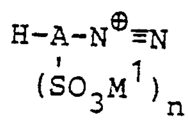

bevorzugt in Schwefelsäure, Phosphorsäure oder Oxalsäure zur Reaktion gebracht.

Als säurebindende Mittel kommen vorzugsweise Alkalien oder Ammoniumsalze wie NaOH, KOH, $Na_2CO_3$, $K_2CO_3$, $Ca(OH)_2$, $CaCO_3$, LiOH, $Li_2CO_3$, $(NH_4)_2CO_3$, $NH_4HCO_3$, insbesondere aber LiOH, $Li_2CO_3$ in Frage. Mit Hilfe der säurebindenden Mittel wird bevorzugt auf pH 5 - 9 abgestumpft.

Die so erhaltene Lösung der Reaktivfarbstoffe (1) wird mit solchen Kationen versetzt, die mit der Säure des Diazotierungsmediums schwer lösliche Salze bilden und wird von den unlöslichen Salzen abgetrennt und direkt entweder zur konzentrierten lagerstabilen Lösung weiterverarbeitet oder nach Zusatz von festen Einstellmitteln, Puffersubstanzen, Entstaubungsmitteln zur salzarmen Pulver- bzw. Granulat-Präparation getrocknet.

Eine weitere Möglichkeit des erfindungsgemäßen Verfahrens für salzarme Präparationen der Reaktivfarbstoffe



BAD ORIGINAL

(1) besteht darin, eine erfindungsgemäß hergestellte salzarme Lösung des sauren Farbstoffs (3)

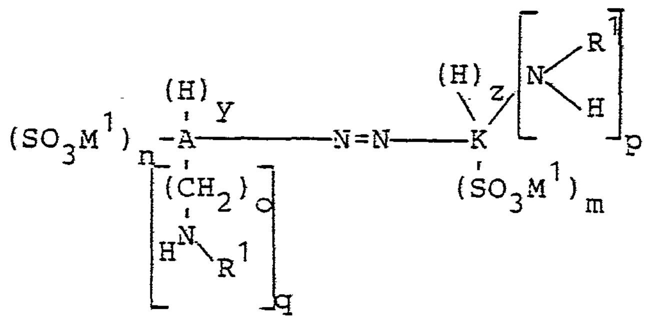

(3)

mit der Reaktivkomponente R-X, wenn nötig in Gegenwart konzentrationserhöhender Zusatzstoffe, umzusetzen. Die dabei freiwerdende Säure wird, wie oben beschrieben, vorzugsweise mit basischen Alkali- oder Erdalkalisalzen, besonders bevorzugt mit basischen Li-Salzen, bevorzugt auf pH = 5 - 9 abgestumpft.

Wird bei der Umsetzung mit der Reaktivkomponente R-X Fluorid frei, so wird $F^-$ während oder nach der Kupplung zusammen mit dem Anion der Säure ausgefällt. Wird R-X mit dem gekuppelten Farbstoff umgesetzt, so wird $F^-$ nach der Umsetzung mit Erdalkaliionen, insbesondere $Ca^{2+}$ gefällt.

Der für die Kupplung optimale pH-Wert wird durch Zugabe von solchen anorganischen basischen Salzen gegebenenfalls in Gegenwart konzentrationserhöhender Zusatzstoffe eingestellt, die mit der für die Diazotierung verwendeten Säure (bevorzugt Schwefelsäure, Phosphorsäure,



BAD ORIGINAL

Oxalsäure) sowie der bei der Kondensation der Reaktivkomponente R-X (X=F) freigesetzten Säure HF schwerlösliche Salze bilden.

Verwendung finden zur Fällung der Anionen der $H_2SO_4$, $H_3PO_4$, Oxalsäure und HF $Ca^{2+}$ und $Ba^{2+}$-Ionen, insbesondere $Ca^{2+}$, sowie zur Fällung der Anionen der Phosphorsäure auch Lithiumsalze, gegebenenfalls in Mischung mit anderen basischen Verbindungen wie NaOH, $Na_2CO_3$, $NaHCO_3$, KOH und $K_2CO_3$ und $NH_4$-Salzen. Bevorzugt werden vor der Kupplung zu der Suspension oder Lösung der Kupplungskomponente, gegebenenfalls in Gegenwart konzentrationserhöhender Zusatzstoffe, basische Erdalkali- oder Lithiumsalze vorgelegt, die bei pH 7 schwer löslich sind und die bei der Ausfällung der Säure kein zusätzlich lösliches Anion einer starken Säure liefern, wie z.B. $CaCO_3$, $BaCO_3$, CaO, $Ca(OH)_2$, $Ba(OH)_2$, $Li_2CO_3$.

Im einzelnen kann das erfindungsgemäße Verfahren zur Herstellung salzarmer Präparationen der Reaktivfarbstoffe (1) Anwendung finden für:

1. Die Kupplung der bevorzugt in Schwefelsäure, Phosphorsäure, Oxalsäure diazotierten Amine $(SO_3M^1)_n\text{-}\underset{H}{A}\text{-}NH_2$ mit der Kupplungskomponente $K\text{-}(SO_3M^1)_m\text{-}N{<}^{R^1}_{R}$, wobei A, K, R, $R^1$, $M^1$, m, n die oben angegebene Bedeutung besitzen.

2. Die Kupplung der bevorzugt in Schwefelsäure, Phosphorsäure, Oxalsäure diazotierten Amine



BAD ORIGINAL

$(SO_3M^1)_n-\overset{H}{A}-NH_2$ mit der Kupplungskomponente

$K-(SO_3M^1)_m-NR^1-H$, wobei A, K, $R^1$, $M^1$, m, n die oben angegebene Bedeutung besitzen.

Der Azofarbstoff (4)

$$(SO_3M^1)_n - \overset{H}{A} - N = N - K\ (SO_3M^1)_m - NR^1H \quad (4)$$

wird dann wie beschrieben mit der Reaktivkomponente R-X umgesetzt.

3. Die Kupplung der bevorzugt in Schwefelsäure, Phosphorsäure, Oxalsäure diazotierten Amine

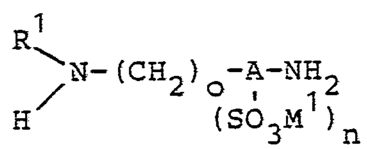 (5)

mit den Kupplungskomponenten $\overset{H}{K} - (SO_3M^1)_m$, wobei A, K, $R^1$, $M^1$, m, n, o die oben angegebene Bedeutung besitzen.

Der Azofarbstoff (6)

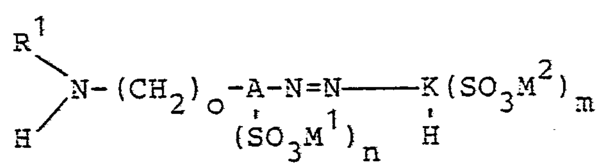

wird dann wie beschrieben mit der Reaktivkomponente R-X umgesetzt.



BAD ORIGINAL

Im Falle der konzentrierten lagerstabilen Lösungen der Reaktivfarbstoffe (1) ist der Gehalt an anorganischen Salzen wie Alkalisulfate und Chloride $\leq$ 10 Gew.-%, bevorzugt $\leq$ 6 Gew.-%, bezogen auf die Lösung. Wird bei der Umsetzung der Reaktivkomponente R-X mit der Kupplungskomponente $K(SO_3M^1)_m$-N R $R^1$ oder mit dem sauren Farbstoff $(SO_3M^1)_n$ - A - N = N - K $(SO_3M^1)_m$ - $NR^1$ H HF frei, so werden bevorzugt basische Ca- und/oder Ba-Verbindungen zum Halten des pH-Wertes auf 5 - 9 verwendet. Die erfindungsgemäß hergestellten salzarmen Reaktivfarbstofflösungen enthalten dann weniger als 1 Gew.-% bevorzugt weniger als 0,5 Gew.-% freies $F^{\ominus}$.

Unter heterocyclischen Reaktivresten R werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel, gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen.

Geeignete Reaktivgruppen, welche mindestens einen abspaltbaren Substituenten an einen heterocyclischen Rest gebunden enthalten, sind unter anderem solche, die mindestens einen reaktiven Substituenten an einen 5- oder 6-gliedrigen heterocyclischen Ring gebunden enthalten, wie an einen Monazin-, Diazin-, Triazin-, z.B. Pyridin-, Pyrimidin-, Pyridazin-, Thiazin-, Oxazin- oder asymme-



BAD ORIGINAL

trischen oder symmetrischen Triazinring, oder an ein derartiges Ringsystem, welches einen oder mehrere ankondensierte Ringe aufweist, wie ein Chinolin-, Phthalazin-, Chinnolin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Azido-($N_3$), Rhodanido, Thio, Thiolether, Oxyether.

Bevorzugt sind im Fall der vorliegenden Erfindung Reaktivfarbstoffe mit Reaktivgruppen auf Basis folgender Systeme:

Mono- oder Dihalogen-symmetrische Triazinylreste, Mono-, Di- oder Trihalogenpyrimidinylreste oder halogensubstituierte Chinoxalinylcarbonylreste.

Insbesondere bevorzugt sind folgende Reaktivgruppen der Formel (7), (8) und (9):



BAD ORIGINAL

 

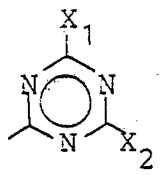

(7)

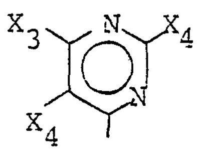

(8)

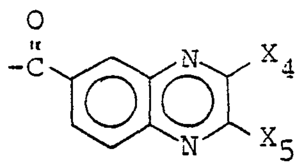

(9)

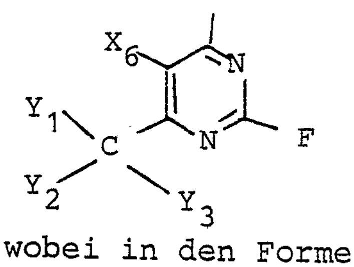

(10)

wobei in den Formeln (7), (8), (9) und (10) gilt:

$X_1$ = F

$X_2$ = Cl, F, $NH_2$, $NHR^2$, $OR^2$, $CH_2R^2$, $SR^2$

$X_3$ = Cl, F, $CH_3$

$X_4$ = Cl, F

$X_5$ = Cl, F, $CH_3$

$X_6$ = H, Cl, Br

$Y_1$ = H oder Cl

$Y_2$ = H oder Cl

$Y_3$ = Cl oder F

und wobei

$R^2$ = Alkyl (insbesondere gegebenenfalls durch OH, $SO_3H$, COOH substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl), Aralkyl (insbesondere gegebenenfalls durch $SO_3H$, $C_1$-$C_4$-Alkyl, $C_1$-$C_4$-Alkoxy substituiertes Benzyl).

Farbstoffe, welche die obengenannten Reaktivgruppensysteme enthalten sind beispielsweise aus folgenden Publikationen bekannt:

US-PS 3 377 336, US-PS 3 527 760
GB-PS 1 169 254, US-PS 3 669 951
DE-PS 1 644 208, GB-PS 1 188 606
DE-OS 2 817 780, ES-PS 479 771

Als konzentrationserhöhende Zusatzstoffe bei dem neuen Herstellungsverfahren können z.B. Verwendung finden: cyclische Ether wie Tetrahydrofuran, Ethylencarbonat, Propylencarbonat und/oder niedere aliphatische oder cyclische Amide, wie ε-Caprolactam oder N-Vinylpyrrolidone und deren Polymere und/oder aliphatische Sulfoxide und/oder schwefelhaltige Verbindungen wie Dimethylsulfon, Diethyl-Sulfon und/oder hydrotrope Verbindungen wie Thioharnstoff, Harnstoff, sowie die dazu gehörigen Derivate, besonders bevorzugt sind N,N'-Dimethylharnstoff, ε-Caprolactam und Dimethylsulfon.

Als gegebenenfalls zugesetzte Puffersubstanzen kommen vorzugsweise solche in Frage, die im Bereich pH 6,5 - 9 puffern. Beispielhaft seien die folgenden Puffersysteme genannt:



BAD ORIGINAL

1. Monokaliumdihydrogenphosphat/Dikaliumhydrogenphosphat-Mischungen

2. Borsäure mit Alkalihydroxid auf pH 7 - 8,5 gestellt

3. Citronensäure mit Alkalihydroxid auf pH 6 - 8 gestellt

4. $HCO_3^-/CO_3^{2-}$-Mischungen auf pH 7 - 8,5 gestellt bzw. Mischungen von 1 bis 4.

Die nach dem erfindungsgemäßen Verfahren hergestellten lagerstabilen Präparationen der Reaktivfarbstoffe (1) (konzentrierte Lösungen oder Flüssigkristalleinstellungen) haben vorzugsweise folgende Zusammensetzung:

Der Reaktivfarbstoffgehalt in der erfindungsgemäß hergestellten konzentrierten Lösung oder konzentrierten Flüssigkristalleinstellung liegt bei 10 - 40 Gew.-% (bevorzugt 13 - 30 Gew.-%) außerdem enthält die Flüssigeinstellung bis zu 2 Gew.-% Puffersubstanzen für den pH-Wert 6,5 - 8,5, bevorzugt 0,5 - 1 Gew.-% Puffer, gegebenenfalls bis zu 30 Gew.-% eines konzentrationserhöhenden Zusatzstoffes, sowie bis zu 10 Gew.-% Alkalisalze, bevorzugt $\leq$ 6 Gew.-% Lithiumsalze. Insbesonders bevorzugt sind die Flüssigeinstellungen.

Die so hergestellten Flüssigeinstellungen der Reaktivfarbstoffe (1) können, falls sie als konzentrationserhöhende Zusatzstoffe feste Produkt wie $\varepsilon$-Caprolactam



BAD ORIGINAL

und insbesondere N,N'-Dimethylharnstoff enthalten, getrocknet werden, wobei vor oder nach der Trocknung übliche Einstellmittel oder Entstaubungsmittel zugesetzt werden können.

Man erhält auf diese Weise salzarme Pulver bzw. Granulatformierungen mit guter Löslichkeit.

Die Trocknung kann zum Beispiel in einem Umluftschrank, mit Schaufeltrockner, Walzentrockner, bevorzugt jedoch durch Sprühtrocknung mit einer Ein- oder Zweistoffdüse oder Zerstäuberscheibe erfolgen. Bei einigen Farbstoffen ist es vorteilhaft, daß man eine heiße Lösung der Komponente sprühtrocknet. Die Konzentration der Feststoffe in Wasser beträgt bei der Sprühtrocknung üblicherweise 10 - 45 Gew.-%.

Als Einstellmittel kommen übliche Einstellmittel, d.h. feste Verbindungen in Frage, die keine Reatkion mit der Reaktivgruppe eingehen wie z.B. anorganische Salze, besonders bevorzugt LiCl, $Li_2SO_4$ oder Polyphosphate, vorzugsweise aber Nichtelektrolyte wie Polyvinylpyrrolidon, Harnstoff, Salze von wasserlöslicher aromatischer Sulfosäure wie Benzolsulfonsäure und anionische Dispergiermittel wie sulfatierte primäre oder sekundäre aliphatische Alkohole mit 10 bis 18 Kohlenstoffatomen, sulfatierte Fettsäureamide, sulfatierte Alkylenoxyaddukte, sulfatierte partiell veresterte mehrwertige Alkohole, und vor allem Sulfonate, wie langkettige Alkylsulfonate,



BAD ORIGINAL

beispielsweise Laurylsulfonat, Cetylsulfonat, Stearylsulfonat, Mersolate, Natriumdialkylsulfosuccinate, wie Natriumdioctylsulfosuccinat, wie Tauride, beispielsweise Oleylmethyltaurid (Natriumsalz), Alkyllarylsulfonate, wie Alkylbenzolsulfonate mit geradkettiger oder verzweigter Alkylkette mit 7 bis 20 Kohlenstoffatomen und Mono- und Dialkylnaphthalinsulfonate, wie Nonylbenzolsulfonat, Dodecylbenzolsulfonat und Hexadecylbenzolsulfonat, sowie 1-Isopropyl-naphthalin-2-sulfonat, Di-iso-propylnaphthalinsulfonat und insbesondere Kondensationsprodukte aus aromatischen Sulfonsäuren und Formaldehyd wie Naphthalinsulfonsäure, Ditolylethersulfonsäuren oder Terphenylsulfonsäuren mit Formaldehyd und/oder Kondensationsprodukte aus Cyclohexanon, Formaldehyd und Bisulfit und/oder Ligninsulfonate. Weiterhin können noch übliche Entstaubungsmittel wie Öle, Öl/Emulgator-Mischungen oder Phthalsäureester zugesetzt werden.

Die nach dem erfindungsgemäßen Verfahren hergestellten salzarmen festen Präparationen der Reaktivfarbstoffe (1) haben vorzugsweise folgende Zusammensetzung:

Der Reaktivfarbstoffgehalt in der erfindungsgemäß hergestellten Präparation liegt bei 20 - 90 Gew.-% (bevorzugt 30 - 80 Gew.-%); außerdem enthält die Einstellung bis zu 20 Gew.-%, bevorzugt $\leq$ 15 Gew.-% Salz, bis zu 5 Gew.-% Puffersubstanzen für den pH-Wert 6,5 - 8,5, weiterhin gegebenenfalls 10 - 70 % eines konzentrationserhöhenden Zusatzstoffes, 0 - 50 %, der üblichen Einstellmittel bzw. Mischungen derer, sowie bis zu 4 % Entstaubungsmittel.



BAD ORIGINAL

Die erfindungsgemäß hergestellten festen Präparationen zeichnen sich durch eine sehr gute Löslichkeit in heißem und kaltem Wasser aus. Dies wird durch die konzentrationserhöhenden Zusatzstoffe und den niedrigen Salzgehalt der Präparation erreicht. Besonders gut ist die Löslichkeit, wenn die Farbstoffe in der Form als Lithiumsalze vorliegen. Durch die Umsetzung der Reaktivkomponente R-X mit der Kupplungskomponente oder dem reaktivgruppenfreien sauren Farbstoff in möglichst wenig Wasser, gegebenenfalls unter Zusatz von konzentrationserhöhenden Zusatzstoffen, ist der Gehalt an hydrolysiertem Reaktivfarbstoff sehr gering.

Gegenstand der Erfindung ist weiterhin die Verwendung der erfindungsgemäß hergestellten salzarmen flüssigen oder festen Präparationen der Reaktivfarbstoffe (1) zur Zubereitung von Färbebädern und Druckpasten für die Anwendung auf natürlichen und synthetischen Substraten insbesondere Baumwolle, Wolle, Regeneratcellulose, Papier und Leder.



BAD ORIGINAL

Beispiel 1

1 Mol 1-Amino-8-hydroxy-naphthalin-3,6-disulfonsäure wird in 700 ml Wasser mit Lithiumhydroxid gelöst und mit 1,15 Mol 2,4-Difluor-5-chlor-6-methylpyrimidin umgesetzt. Die bei der Reaktion freiwerdende Fluorwasserstoffsäure wird mit CaO (bzw. mit einem CaO/NaOH oder einem CaO/LiOH-Gemisch) abgestumpft. Nach beendigter Reaktion werden 2 Mol $CaCO_3$-Pulver, 350 g Eis sowie 4,3 Mol ε-Caprolactam zugesetzt. Zu dieser Suspension gibt man langsam eine Aufschlämmung von 1 Mol 1-Amino-benzol-2-sulfonsäure, die in 2 Mol verdünnter Schwefelsäure diazotiert wurden.

Der pH-Wert wird während der Kupplung durch Zugabe von LiOH . $H_2O$ bei ca. 7 gehalten. Nach beendigter Reaktion werden weitere 1,8 Mol ε-Caprolactam zugesetzt. Die Lösung des Reaktivfarbstoffs, dessen Anion folgende Formel besitzt:

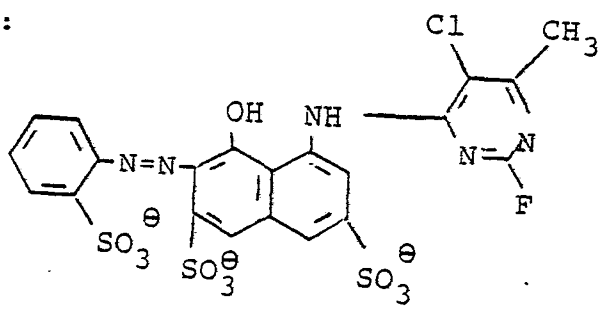

wird anschließend bei 40°C von den unlöslichen Ca-Salzen geklärt und mit 0,7 Gewichtsprozent Carbonat-Puffer stabilisiert. Nach Eintragen dieser konzentrierten Reaktivfarbstofflösung in Wasser, unter Zusatz der für die Reaktivfärberei üblichen Hilfsmittel erhält man eine Präparation zum Färben oder Bedrucken von natürlichen und regenerierten Cellulosefasern in roten Tönen.



BAD ORIGINAL

## Beispiel 2

1 Mol 1-Amino-8-hydroxy-naphthalin-3,6-disulfonsäure wird in 700 ml Wasser mit Lithiumhydroxid gelöst und mit 1,15 Mol 2,4-Difluor-5-chlor-6-methylpyrimidin umgesetzt. Die bei der Reaktion freiwerdende Fluorwasserstoffsäure wird mit CaO (bzw. mit einem CaO/NaOH oder einem CaO/LiOH-Gemisch) abgedampft. Nach beendigter Reaktion werden 2 Mol $CaCO_3$-Pulver, 350 g Eis sowie 4,3 Mol $\varepsilon$-Caprolactam zugesetzt. Zu dieser Suspension gibt man langsam eine Aufschlämmung von 1 Mol 1-Amino-4-Methylbenzol-2-sulfonsäure, die in 2 Mol verdünnter Schwefelsäure diazotiert wurden.

Der pH-Wert wird während der Kupplung durch Zugabe von LiOH . $H_2O$ bei ca. 7 gehalten. Nach beendigter Reaktion werden weitere 1,8 Mol $\varepsilon$-Caprolactam zugesetzt. Die Lösung des Reaktivfarbstoffs, dessen Anion folgende Formel besitzt:

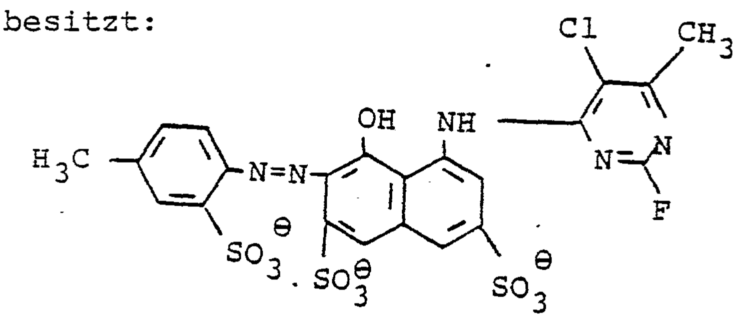

wird anschließend bei 40°C von den unlöslichen Ca-Salzen geklärt und mit 0,7 Gewichtsprozent Carbonat-Puffer stabilisiert. Nach Eintragen dieser konzentrierter Reaktivfarbstofflösung in Wasser, unter Zusatz der für die Reaktivfärberei üblichen Hilfsmittel erhält man eine Präparation zum Färben oder Bedrucken von natürlichen und regenerierten Cellulosefasern in roten Tönen.



BAD ORIGINAL

0100043

Beispiel 3

1 Mol 1-Amino-8-hydroxy-naphthalin-4,6-disulfonsäure wird in 500 ml Wasser mit Lithiumhydroxid gelöst und mit 1,1 Mol 2,4-Difluor-5-chlor-6-methylpyrimidin umgesetzt. Die bei der Reaktion freiwerdende Fluorwasserstoffsäure wird mit CaO (bzw. mit einem CaO/NaOH oder einem CaO/LiOH-Gemisch) abgestumpft. Nach beendigter Reaktion werden 2 Mol $CaCO_3$-Pulver, 350 g Eis zugesetzt. Zu dieser Suspension gibt man langsam eine Aufschlämmung von 1 Mol 1-Amino-benzol-2-sulfonsäure, die in 2 Mol verdünnter Schwefelsäure diazotiert wurden.

Der pH-Wert wird während der Kupplung durch Zugabe von LiOH . $H_2O$ bei ca. 7 gehalten. Nach beendigter Reaktion werden 7 Mol N,N'-Dimethylharnstoff zugesetzt. Die Lösung des Reaktivfarbstoffs, dessen Anion folgende Formel besitzt:

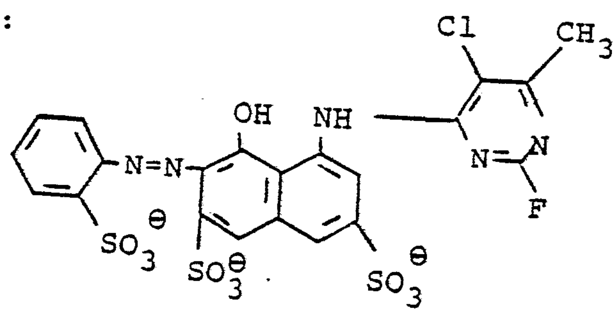

wird anschließend bei 40°C von den unlöslichen Ca-Salzen geklärt und mit 0,7 Gewichtsprozent Carbonat-Puffer stabilisiert. Nach Eintragen dieser konzentrierten Reaktivfarbstofflösung in Wasser, unter Zusatz der für die Reaktivfärberei üblichen Hilfsmittel erhält man eine Präparation zum Färben oder Bedrucken von natürlichen und regenerierten Cellulosefasern in roten Tönen.



BAD ORIGINAL

Beispiel 4

1 Mol 1,3-Diamino-benzol-4-sulfonsäure wird in 500 ml Wasser mit Lithiumhydroxid gelöst und mit 1,15 Mol 2,4-Difluor-5-chlor-6-methylpyrimidin umgesetzt. Die bei der Reaktion freiwerdende Fluorwasserstoffsäure wird mit CaO (bzw. mit einem CaO/NaOH oder einem CaO/LiOH-Gemisch) abgestumpft. Nach beendigter Reaktion werden 2 Mol $CaCO_3$-Pulver, 350 g Eis zugesetzt. Zu dieser Suspension gibt man langsam eine Aufschlämmung von 1 Mol 2-Aminonaphthalin-4,6,8-trisulfonsäure, die in 2 Mol verdünnter Schwefelsäure diazotiert wurden.

Der pH-Wert wird während der Kupplung durch Zugabe von LiOH . $H_2O$ bei ca. 5,5 gehalten. Nach beendigter Reaktion werden 4 Mol Dimethylsulfon zugesetzt. Die Lösung des Reaktivfarbstoffs, dessen Anion folgende Formel besitzt:

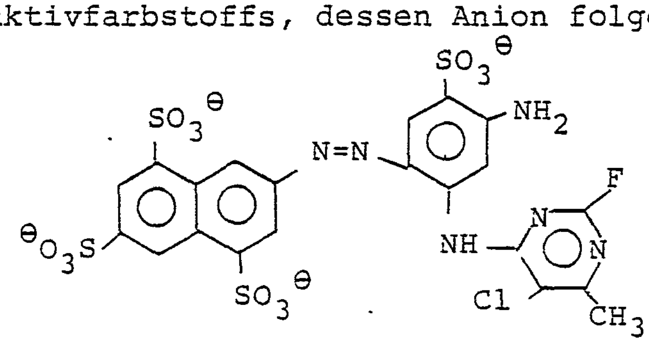

wird anschließend bei 40°C von den unlöslichen Ca-Salzen geklärt und mit 0,7 Gewichtsprozent Carbonat-Puffer stabilisiert. Nach Eintragen dieser konzentrierten Reaktivfarbstofflösung in Wasser, unter Zusatz der für die Reaktivfärberei üblichen Hilfsmittel erhält man eine Präparation zum Färben oder Bedrucken von natürlichen und regenerierten Cellulosefasern in rot-gelben Tönen.



BAD ORIGINAL

Patentansprüche:

1. Verfahren zur Herstellung von salzarmen Präparationen von Azoreaktivfarbstoffen der Formel

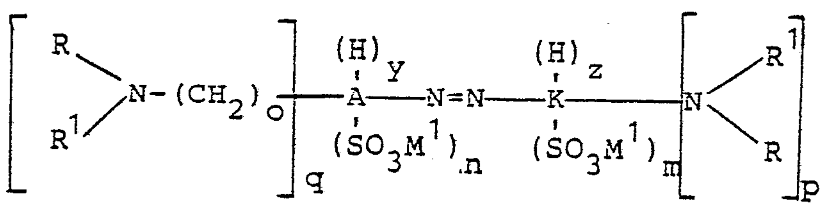

(1)

worin

A = Rest einer Diazokomponente

K = Rest einer Kupplungskomponente

$M^1$ = $NH_4$, Na, K oder Li

R = heterocyclischer Reaktivrest

$R^1$ = Wasserstoff oder Alkyl ($C_1$-$C_4$)

m,n = ganze Zahlen von 0 bis 6, wobei m+n = 1 bis 6,

o = 1 bis 4

p,q = 0 oder 1, wobei p+q = 1

y,z = 0 oder 1, wobei y+z = 1

und wobei q+y = 1 sowie p+z = 1

durch Diazotierung der Diazokomponente sowie Kupplung mit der Kupplungskomponente bei pH 5 bis 9 und Einführung der Reaktivgruppe in Gegenwart säurebindender Mittel, dadurch gekennzeichnet, daß man die Diazotierung mit einer Säure durchführt, deren Anion man während oder nach der Kupplung durch Umsetzung mit entsprechenden Metallkationen als schwerlösliches Salz ausfällt und abtrennt.

2. Verfahren gemäß Anspruch 1, dadurch gekennzeichnet, daß für die Umsetzung Säuren/Kationenpaare der folgenden Reihe eingesetzt werden

Schwefelsäure/$Ca^{2+}$ oder $Ba^{2+}$,
Phosphorsäure/$Ca^{2+}$, $Ba^{2+}$ oder $Li^{+}$,
Oxalsäure/$Ca^{2+}$ oder $Ba^{2+}$
Flußsäure/$Ca^{2+}$ oder $Ba^{2+}$.

3. Verfahren nach Anspruch 1 bis 2, dadurch gekennzeichnet, daß Präparationen von Azoreaktivfarbstoffen der Formel (1) hergestellt werden, in welcher

R für eine Reaktivgruppe der Formeln

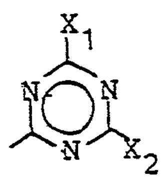

(7)

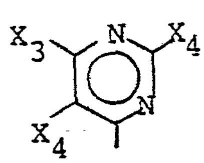

(8)

steht,

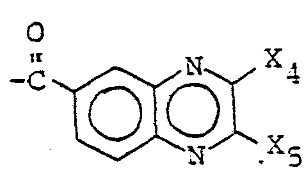

(9)



BAD ORIGINAL

wobei in den Formeln (7), (8) und (9) gilt:

$X_1$ = F
$X_2$ = Cl, F, $NH_2$, $NHR^2$, $OR^2$, $CH_2R^2$, $SR^2$
$X_3$ = Cl, F, $CH_3$
$X_4$ = Cl, F und
$X_5$ = Cl, F, $CH_3$

und wobei

$R^2$ = Alkyl (insbesondere gegebenenfalls durch OH, $SO_3H$, COOH substituiertes $C_1$-$C_4$-Alkyl), Aryl (insbesondere gegebenenfalls durch $SO_3H$, $C_1$-$C_4$-Alkyl, $C_1$-$C_4$-Alkoxy substituiertes Phenyl), Aralkyl (insbesondere gegegebenenfalls durch $SO_3H$, $C_1$-$C_4$-Alkyl $C_1$-$C_4$-Alkoxy substituiertes Benzyl).

4. Verfahren gemäß Anspruch 1 bis 2, dadurch gekennzeichnet, daß Präparationen von Azoreaktivfarbstoffen der Formel (1) hergestellt werden, in welcher R für eine Reaktivgruppe der Formel

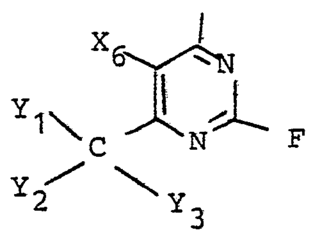

(10)

steht, worin

X = H, Cl oder Br
$Y_1$ = H oder Cl
$Y_2$ = H oder Cl
$Y_3$ = Cl oder F.

5. Verfahren gemäß Anspruch 1 bis 4, dadurch gekennzeichnet, daß man die Kupplung der in Schwefelsäure, Phosphorsäure oder Oxalsäure diazotierten Amine

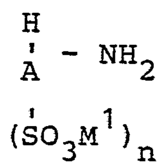

mit den mit der Reaktivkomponente umgesetzten Kupplungskomponenten der Formel

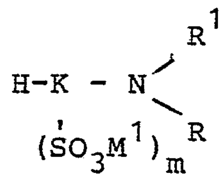

.

umsetzt, wobei K, R, $R^1$, $M^1$, m und n die in Anspruch 1 angegebene Bedeutung besitzen.

6. Verfahren gemäß Anspruch 1 bis 4, dadurch gekennzeichnet, daß man die Kupplung der in Schwefelsäure, Phosphorsäure oder Oxalsäure diazotierten Amine

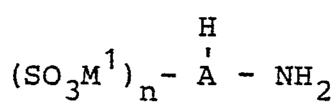

mit der Kupplungskomponente

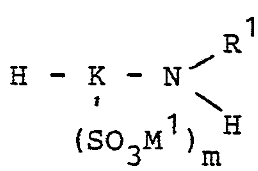

umsetzt und den entstehenden Farbstoff

$$(SO_3M^1)_n - \overset{H}{\overset{|}{A}} - N = N\ K\ (SO_3M^1)_m - NR^1H \qquad (4)$$

mit der Reaktivkomponente R-X umsetzt, wobei A, K, $R^1$, $M^1$, m, n und R die in Anspruch 1 angegebene Bedeutung besitzen und X für Halogen steht.

7. Verfahren nach Anspruch 1 bis 4, dadurch gekennzeichnet, daß man die in Schwefelsäure, Phosphorsäure oder Oxalsäure diazotierten Amine der Formel

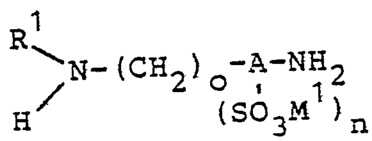 (5)

mit der Kupplungskomponente $\overset{H}{\overset{|}{K}}-(SO_3M^1)_m$ umsetzt und den entstehenden Azofarbstoff der Formel

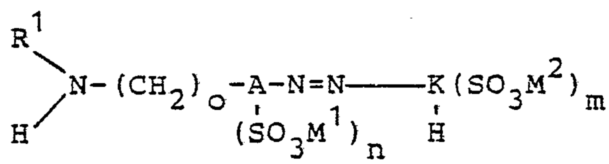 (6)

mit der Reaktivkomponente R-X zur Reaktion bringt wobei A, K, $R^1$, $M^1$, m, n, o, R die in Anspruch 1 angegebene Bedeutung besitzen und X für Halogen steht.

8. Salzarme Präparationen von Reaktivfarbstoffen, erhalten nach den Verfahren gemäß Anspruch 1 bis 7.